# EUROPEAN PATENT APPLICATION

(11) **EP 4 597 707 A1**
(43) Date of publication of application: **06.08.2025**
(21) Application number: 24205898.0
(22) Date of filing: 10.10.2024
(51) Int. Cl.: H01M 50/242, H01M 50/244, H01M 50/264, H01M 50/271, H01M 50/342, H01M 50/213

(54) **BATTERY SYSTEMS AND METHODS OF ASSEMBLING BATTERY SYSTEMS**

(30) Priority: 30.01.2024 CN 202410132738; 02.07.2024 WO PCT/CN2024/103139
(71) Applicant: Eve Energy Co., Ltd., Huizhou, Guangdong 516006 (CN)
(72) Inventor: LIANG, Xianyu, Huizhou, Guangdong 516006 (CN); WEI, Xueqing, Huizhou, Guangdong 516006 (CN); LIU, Pingping, Huizhou, Guangdong 516006 (CN)
(74) Representative: Murgitroyd & Company

(57) **Abstract**

A battery system (10) and a method of assembling a battery system (10) are provided. The battery system includes at least one battery (300) and a battery box, the battery box includes a box body assembly (200) and a battery bracket (100), the battery box is provided with a plurality of battery slot positions for accommodating the at least one battery, each of the plurality of battery slot positions includes a first battery slot position (101) and a second battery slot position (201), the first battery slot position (101) and the second battery slot position (201) are disposed oppositely, the first battery slot position (101) is disposed in the battery bracket (100), the second battery slot position (201) is disposed in the box body assembly (200), the box body assembly (200) and the battery bracket (100) clamp the at least one battery (300).

## Description

### FIELD OF INVENTION

The present disclosure relates to the field of battery technology, and in particular to battery systems and methods of assembling battery systems.

### BACKGROUND OF INVENTION

With the rapid development of new energy, low-voltage batteries for vehicles are facing harsh environments, for example, the battery is subject to strong vibrations and shocks when a vehicle is driving at high speeds on roads with potholed, which can easily cause damage to the battery, and in severe cases, it may cause thermal runaway of the battery and cause safety accidents.

### SUMMARY OF INVENTION

Therefore, it is an urgent to optimize the structure of the battery system and improve the stability of the battery system.

The present disclosure provides a battery system including:
at least one battery;
a battery box configured to accommodate the at least one battery, the battery box includes a box body assembly and a battery bracket installed in the box body assembly, the battery box is provided with a plurality of battery slot positions for accommodating the at least one battery, each of the plurality of battery slot positions includes a first battery slot position and a second battery slot position, the first battery slot position and the second battery slot position are disposed oppositely, the first battery slot position is disposed in the battery bracket, the second battery slot position is disposed in the box body assembly, and structural adhesive for fixing the at least one battery is provided in each of the plurality of battery slot positions.

The present disclosure further provides a method of assembling a battery system, and the method includes:
providing a battery bracket, and each first battery slot position in the battery bracket is provided with at least one first arc-shaped rib position and structural adhesive in advance;
assembling a battery in the first battery slot position, and connecting a preset battery management system BMS assembly and a busbar with the battery;
providing a box body assembly, and each second battery slot position in the box body assembly is provided with at least one second arc-shaped rib position and structural adhesive in advance;
assembling the battery bracket equipped with the battery with the box body assembly; and
providing a cover assembly, and fitting the cover assembly with the box body assembly that is assembled.

### Beneficial Effects

The battery system provided in the present disclosure clamps the battery through the box body assembly and the battery bracket, thereby limiting and fixing the battery, ensuring that the battery is fixed in the battery slot position, and preventing relative movement between the battery and the battery box, and therefore, improving the stability of the battery system. In addition, since the second battery slot position is directly disposed in the box body assembly, compared with the combined structure of an independent mounting slot component and a box body, the box body assembly has a lower height, which saves the height space.

### DESCRIPTION OF DRAWINGS

FIG. 1 is a schematic perspective view of a battery system from an oblique viewing angle provided by some implementations of the present disclosure;
FIG. 2 is a schematic exploded view of a battery system provided by some implementations of the present disclosure;
FIG. 3 is a schematic perspective view of a battery system from a bottom viewing angle provided by some implementations of the present disclosure;
FIG. 4 is a schematic perspective view of a battery bracket from a bottom viewing angle provided by some implementations of the present disclosure;
FIG. 5 is a schematic perspective view of a battery bracket equipped with batteries from a bottom viewing angle provided by some implementations of the present disclosure;
FIG. 6 is a schematic top view of a battery system with an upper cover removed provided by some implementations of the present disclosure;
FIG. 7 is a schematic cross-sectional view of FIG. 6 along A-A provided by some implementations of the present disclosure;
FIG. 8 is a schematic flow diagram of a method of assembling a battery system provided by some implementations of the present disclosure.

### Explanation of reference numerals:

Battery system 10, Battery bracket 100, Box body assembly 200, Battery 300, Structural adhesive 400, Busbar 500, BMS assembly 600, Cover assembly 700;

First battery slot position 101, First arc-shaped rib position 102, First convex rib 103, Bottom plate 104, Third side plate 105, End plate 106, Opening 107;

Second battery slot position 201, Second arc-shaped rib position 202, Second convex rib 203, First side plate 204, First pressure relief valve 205, Second side plate 206, Second pressure relief valve 207, First pressure relief channel 208, Second pressure relief channel 209, Reinforcing rib 210, Connecting portion 211, Pressure relief channel 212;

Explosion-proof valve 301.

### DETAILED DESCRIPTION OF EMBODIMENTS

It should be understood that the specific embodiments described herein are only intended to illustrate and explain the present disclosure, and are not intended to limit the present disclosure. In the present disclosure, unless otherwise specified, directional words used herein, such as "upper" and "lower", generally refer to upper and lower positions of a device in actual use or in working conditions, specifically refer to directions in the surfaces of the accompanying drawings; and terms "inside" and "outside" are for the contour of the device.

In related technologies, low-voltage batteries used in vehicles face harsh environments, for example, the battery is subject to strong vibrations and shocks when a vehicle is driving at high speeds on roads with potholed, which can easily cause damage to the battery, and in severe cases, it may cause thermal runaway of the battery and cause safety accidents. For this reason, embodiments of the present disclosure provide a battery system and a method of assembling a battery system to clamp the battery through the box body assembly and the battery bracket, so as to limit and fix the battery, thereby ensuring that the battery is fixed in the battery slot position, and preventing relative movement between the battery and the battery box, and therefore, improving the stability of the battery system. Since the second battery slot position is directly disposed in the box body assembly, compared with the combined structure of an independent mounting slot component and a box body, the box body assembly has a lower height, which saves the height space. Specific embodiments are referred to the following specific description.

It should be noted that in the following, the terms "battery module", "battery", "battery element", "cell" and "battery pack" can be used interchangeably and can refer to any one of a variety of different chemistries and structures of rechargeable batteries, including but not limited to lithium ion (e.g., lithium ion phosphate, lithium cobalt oxide, lithium iron phosphate and other lithium oxide and metallic lithium), lithium ion polymer, nickel metal hydride, nickel cadmium, nickel hydrogen, nickel-zinc, silver-zinc, or other battery types/constructions. The term "electric vehicle" is used herein to refer to a full electric vehicle (also known as EV), a plug-in hybrid vehicle (also known as PHEV), or a hybrid electric vehicle (HEV), wherein the hybrid vehicle adopts one of the above as multiple propulsion sources for the electric driving system. It would be understood that the same reference numerals are used throughout the various drawings to refer to the same components or functionally equivalent components.

Embodiments of the present disclosure are generally applicable to systems employing electric motors, and more particularly, but not exclusively, to electric vehicles using multi-phase electric motors, such as inductive electric motors. The electric vehicle uses one or more energy storage sources, such as a battery module, to provide electrical energy to the vehicle. At least a part of the energy is used to propel the vehicle. The stored energy can also be used to provide energy required by other vehicle systems, for example, the vehicle lighting, the heating, ventilation and air conditioning (HVAC) system for vehicle zone, auxiliary control systems (e.g., sensors, displays, navigation systems, etc.), vehicle entertainment systems (such as radio, digital video disc (DVD), moving picture experts group audio layer III (MP3), etc.) and the like. Conventional electric vehicles include passenger vehicles and vehicles designed to transport cargo, examples of which include passenger vehicles, trucks, electric bicycles, and pleasure vessels. Electric vehicles further include specialized work vehicles and carts, some of which may incorporate with forklifts, scissor lifts, lift and/or articulating boom aerial work platforms, street cleaning systems, conveyor belts and plate carrier platforms.

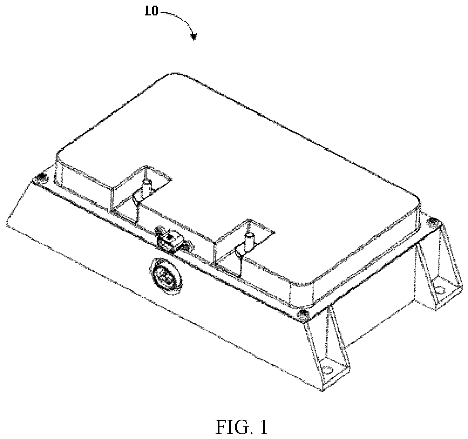

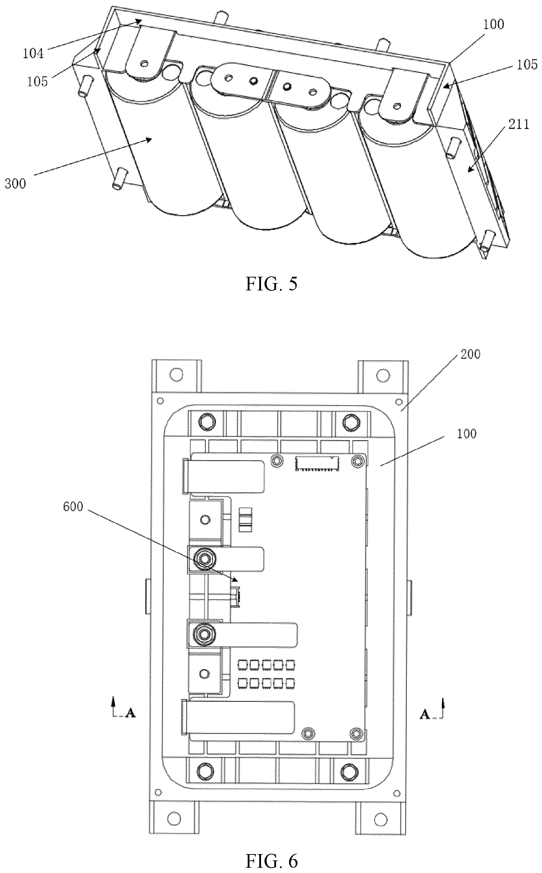

Specifically, referring to FIG. 1 to FIG. 8, FIG. 1 is a schematic perspective view of a battery system from an oblique viewing angle provided by an embodiment of the present disclosure. The battery system 10 specifically includes at least one battery 300 and a battery box for accommodating the at least one battery 300. The battery box includes a box body assembly 200 and a battery bracket 100 installed in the box body assembly 200. The battery box is provided with a plurality of battery slot positions for accommodating the at least one battery 300. Each of the plurality of battery slot positions includes a first battery slot position 101 and a second battery slot position 201, the first battery slot position 101 and the second battery slot position 201 are disposed oppositely, the first battery slot position 101 is disposed in the battery bracket 100, the second battery slot position 201 is disposed in the box body assembly 200, and the box body assembly 200 and the battery bracket 100 clamp the at least one battery 300.

The battery system 10 provided in this embodiment is a low-voltage battery system, the voltage thereof can be specifically 12V, the number of the battery 300 thereof can be 4 or other numbers, which can be set according to actual needs.

At the same time, with the later development of the low-voltage battery system 10, the voltage thereof can also be adjusted accordingly, for example, it can be 48V, and which can be set according to actual needs.

Each of the cross-sectional shape of the first battery slot position 101 and the second battery slot position 201 is a semi-circular arc shape which is adapted to the battery 300.

In the embodiment of the present disclosure, the box body assembly 200 and the battery bracket 100 clamp the battery 300, so as to limit and fix the battery 300, thereby ensuring that the battery 300 is fixed in the battery slot position, and preventing relative movement between the battery 300 and the battery box, and therefore, improving the stability of the battery system 10; since the second battery slot position 201 is directly disposed in the box body assembly 200, compared with the combined structure of an independent mounting slot component and a box body, the box body assembly 200 has a lower height, which saves the height space.

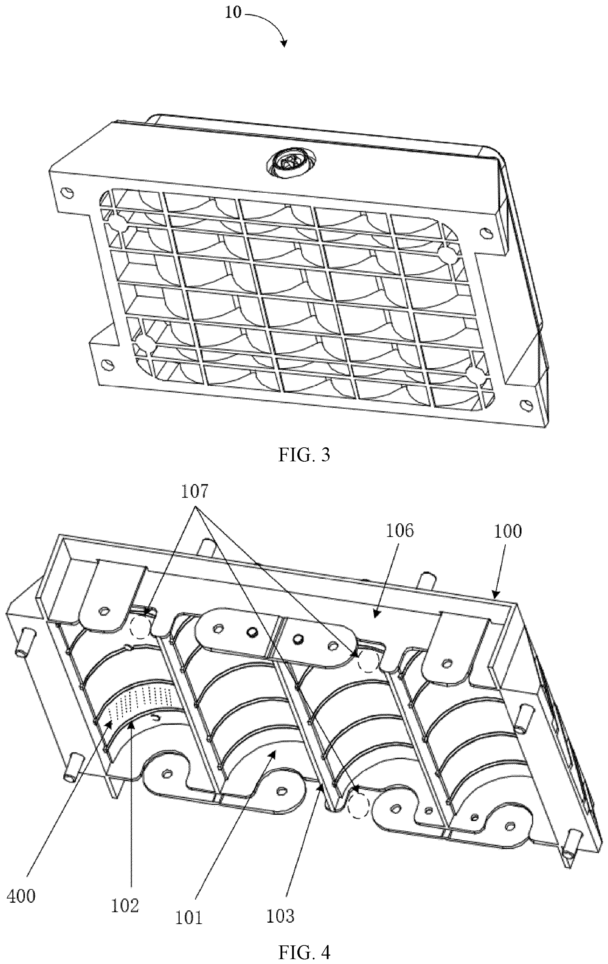

In order to improve the structural stability of the battery system 10, as shown in FIG. 1 and FIG. 4, in some embodiments of the present disclosure, the slot wall of the first battery slot position 101 is provided with a plurality of first arc-shaped rib positions 102 that abut against the battery 300.

In some embodiments of the present disclosure, the slot wall of the second battery slot position 201 is provided with a plurality of second arc-shaped rib positions 202 that abut against the battery 300.

In some embodiments of the present disclosure, the slot wall of the first battery slot position 101 is provided with a plurality of first arc-shaped rib positions 102 that abut against the battery 300; and the slot wall of the second battery slot position 201 is provided with a plurality of second arc-shaped rib positions 202 that abut against the battery 300.

The embodiment of the present disclosure can effectively improve the structural strength of the battery bracket 100 by disposing a plurality of first arc-shaped rib positions 102 on the slot wall of the first battery slot position 101, and can effectively improve the structural strength of the box body assembly 200 by providing a plurality of second arc-shaped rib positions 202 on the slot wall of the second battery slot position 201, which can provide a positioning reference for the battery 300.

In some embodiments of the present disclosure, a plurality of first arc-shaped rib positions 102 are evenly spaced apart on the slot wall of the first battery slot position 101, and structural adhesive 400 for fixing the battery 300 is provided between adjacent first arc-shaped rib positions 102, and/or the structural glue 400 for fixing the battery 300 is provided between the first arc-shaped rib position 102 and two ends of the first battery slot position 101.

A plurality of second arc-shaped rib positions 202 are evenly spaced apart on the slot wall of the second battery slot position 201, and structural adhesive 400 for fixing the battery 300 is provided between adjacent second arc-shaped rib positions 202, and/or the structural glue 400 for fixing the battery 300 is provided between the second arc-shaped rib position 202 and two ends of the second battery slot position 201.

The thickness of the structural adhesive 400 may be equal to the thickness of the first arc-shaped rib position 102 and/or the second arc-shaped rib position 202.

In the embodiment of the present disclosure, through the arrangement of the structural adhesive 400 and the first arc-shaped rib position 102 in some implementations, the adhesive thickness of the battery 300 can be ensured, so as to ensure the adhesive effect and durability of the battery 300 with the battery bracket 100 and the box body assembly 200, thereby improving the overall stability and safety of the battery system 10.

It should be noted that the structural adhesive 400 in FIG. 1 is for convenience of observing and is only used for schematic illustration, the specific arranging area and range of the structural adhesive 400 are as follows in the following specific embodiments.

In some embodiments of the present disclosure, a first convex rib 103 is provided between adjacent two first battery slot positions 101.

It should be noted that the two ends of the first battery slot position 101 can refer to two ends of the first battery slot position 101 along the extension direction of the first convex rib 103.

Similarly, the two ends of the second battery slot position 201 can refer to two ends of the second battery slot position 201 along the extension direction of the first convex rib 103.

In some embodiments of the present disclosure, a second convex rib 203 is provided between adjacent two second battery slot positions 201.

In some embodiments of the present disclosure, a first convex rib 103 is provided between adjacent first battery slot positions 101; and a second convex rib 203 is provided between adjacent second battery slot positions 201.

In the embodiment of the present disclosure, by disposing a first convex rib 103 between adjacent first battery slot positions 101; and/or disposing a second convex rib 203 between adjacent second battery slot positions 201, the overall structural strength and safety of the battery system 10 can be effectively improved.

In order to improve the safety of the battery system 10 and avoid safety accidents caused by thermal runaway of the battery 300, in some embodiments of the present disclosure, a pressure relief channel 212 is formed between the battery bracket 100 and the box body assembly 200. The pressure relief channel 212 is located between the end portion of the battery 300 and the side plate of the box body assembly 200, the explosion-proof valve 301 of the battery 300 is directly in communication with the pressure relief channel 212. In this way, under the condition that the battery system 10 can deal with the thermal runaway, its structure is simple for manufacture, thereby reducing costs and increasing efficiency.

Optionally, the end plate 106 of the battery bracket 100 is provided with an opening 107, so as to communicate the explosion-proof valve 301 of the battery 300 with the pressure relief channel 212. Therefore, the battery bracket 100 can be prevented from blocking the explosion-proof valve 301 of the battery 300, which helps the battery 300 to smoothly release the pressure when thermal runaway occurs.

Optionally, a pressure relief valve is installed on the side plate, and the pressure relief valve is in communication with the pressure relief channel 212.

Specifically, a first pressure relief valve 205 is disposed on the first side plate 204 of the box body assembly 200 close to the first end of the battery 300. In this way, pressure relief of thermal runaway on the first end side of the battery 300 can be achieved, thereby improving the safety of the battery system 10.

Optionally, a second pressure relief valve 207 is disposed on the second side plate 206 of the box body assembly 200 close to the second end of the battery 300. In this way, pressure relief of thermal runaway on the second end side of the battery 300 can be achieved, thereby improving the safety of the battery system 10.

The first pressure relief valve 205 is disposed on the first side plate 204 of the box body assembly 200 close to the first end of the battery 300, and the second pressure relief valve 207 is simultaneously disposed on the second side plate 206 of the box body assembly 200 close to the second end of the battery 300. In this way, both ends of the battery 300 can perform pressure relief of thermal runaway at the same time, thereby improving the safety of the battery system 10.

In some embodiments of the present disclosure, both ends of the battery are provided with the explosion-proof valve 301, the pressure relief channel 212 includes a first pressure relief channel 208 and a second pressure relief channel 209 respectively located at two sides of the battery bracket 100. The first pressure relief channel 208 is directly in communication with the explosion-proof valve 301 located at the first end of the battery 300, and the second pressure relief channel 209 is directly in communication with the explosion-proof valve 301 located at the second end of the battery 300. In this way, when thermal runaway occurs in the battery 300, both ends of the battery 300 can perform explosion-proof pressure relief at the same time, which improves the ability of explosion-proof pressure-relief, thereby improving the safety of the battery system 10.

In some embodiments of the present disclosure, the battery system 10 further includes a battery management system BMS assembly 600 which is connected to the battery 300. The pressure relief channels and the BMS assembly 600 are disposed at two different sides of the battery bracket 100. In this way, the flue gas can be isolated from the BMS assembly, so as to prevent the BMS assembly from being damaged and unable to report a warning signal of thermal runaway.

The first pressure relief channel 208 and/or the second pressure relief channel 209 are/is isolated from the BMS assembly 600. Specific implementations can be referred to the following embodiments, which will not be described again herein.

In some embodiments of the present disclosure, the battery bracket 100 includes a bottom plate 104 located at the bottom portion of the first battery slot position 101. The BMS assembly 600 is installed on the side of the bottom plate 104 away from the battery 300. The end of the bottom plate 104 abuts against the side plate of the box body assembly 200, so as to form the pressure relief channel 212 on the side of the bottom plate 104 close to the battery 300.

The embodiment of the present disclosure provides countermeasures against thermal runaway in the battery system 10, so that the flue gas is isolated from the BMS assembly 600, so that BMS is prevented from being damaged and unable to report a warning signal of thermal runaway, directional exhaust is achieved, which can prevent the battery system 10 from being exploded to a certain extent, and thereby effectively improving the safety of the battery system 10.

In some embodiments of the present disclosure, the battery bracket 100 further includes at least one third side plate 105 connected to the side of the bottom plate 104 close to the battery 300. The end of the third side plate 105 abuts against the side plates of the box body assembly 200, so as to form the pressure relief channel on the side close to the battery 300. A connection portion 211 for fixing the battery bracket 100 to the box body assembly 200 is disposed on the side of the third side plate 105 away from the pressure relief channel.

In the embodiment of the present disclosure, by abutting the end of the third side plate 105 against the side plate of the box body assembly 200 to form the pressure relief channel 212 on the side close to the battery 300, so that a mounting position is isolated at the side at which the pressure relief channel 212 is not located, which is convenient for installing the battery bracket 100 and box body assembly 200. The bottom plate 104, two third side plates 105, the side plates of the box body assembly 200, and the bottom guarding plate of the box body assembly 200 form the pressure relief channel 212.

In order to improve the structural strength of the battery bracket 100, in the embodiment of the present disclosure, reinforcing ribs 210 can be disposed on the outside of the two third side plates 105, and a connecting portion 211 is disposed on one end of the third side plate away from the bottom plate 104. The reinforcing ribs 210 are respectively connected to the third side plates 105 and the connecting portions 211, and the connecting portions 211 are configured to fix the battery bracket 100 to the box body assembly 200.

In some embodiments of the present disclosure, the battery system 10 further includes a busbar 500, the busbar is disposed on the battery bracket 100 and is connected to the battery 300.

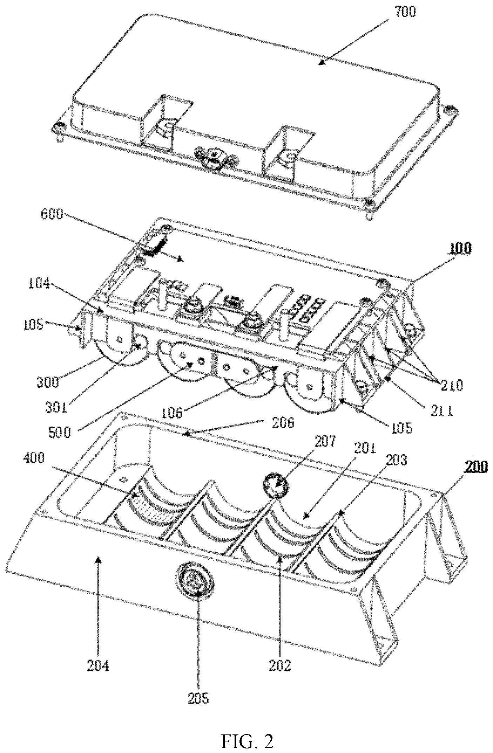

In a specific embodiment of the present disclosure, as shown in FIG. 2, FIG. 4 and FIG. 5, the battery system 10 includes four batteries 300, from left to right, the outer end of the first battery is connected to a busbar 500 configured to connect to an input line or an output line, the inner end of the first battery is connected to the inner end of the second battery through a busbar 500 fixed on the battery bracket 100, the outer end of the second battery is connected to the outer end of the third battery through the busbar 500, the inner end of the third battery is connected to the inner end of the fourth battery through the busbar 500 fixed on the battery bracket 100, and the outer end of the fourth battery is connected to the busbar 500 configured to connect an output line or an input line.

In some embodiments of the present disclosure, the battery system 10 further includes a BMS assembly 600, the BMS assembly 600 is disposed on the side of the battery bracket 100 away from the box body assembly 200 and is connected to the battery 300.

In some embodiments of the present disclosure, the battery system 10 further includes a cover assembly 700, the cover assembly is disposed on the box body assembly 200, and the cover assembly 700 is configured to cover and fit with the box body assembly 200.

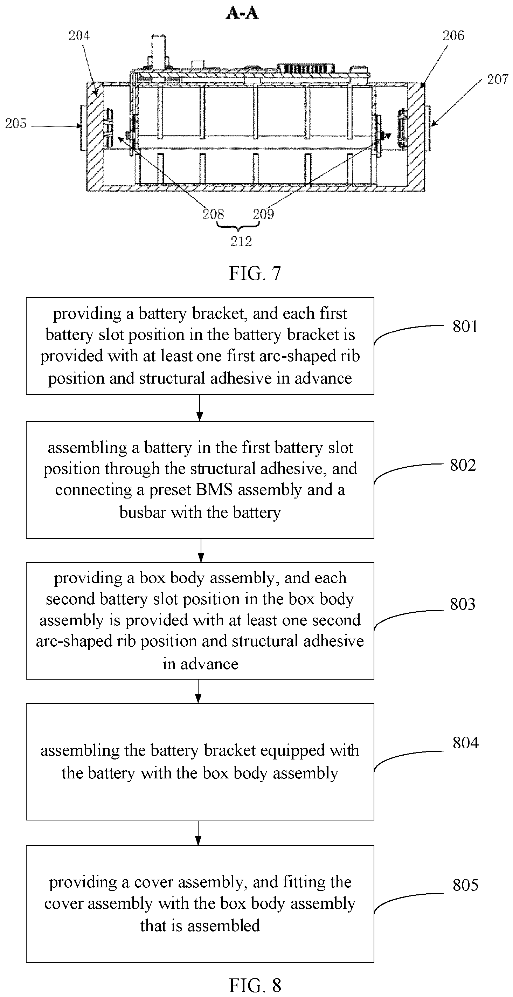

In addition, the present disclosure further provides a method of assembling a battery system, as shown in FIG. 8, FIG. 8 is a schematic flow diagram of a method of assembling a battery system provided by an embodiment of the present disclosure, and the method includes the following steps.

801, providing a battery bracket, and each first battery slot position in the battery bracket is provided with at least one first arc-shaped rib position and structural adhesive in advance.

In addition, a first convex rib can also be disposed in advance between adjacent two first battery slot positions.

802, assembling a battery in the first battery slot position through the structural adhesive, and connecting a preset BMS assembly and a busbar with the battery.

Assembling the battery in the first battery slot position can include applying a tooling in the first battery slot position to perform the assembly with auxiliary positioning.

803, providing a box body assembly, and each second battery slot position in the box body assembly is provided with at least one second arc-shaped rib position and structural adhesive in advance.

In addition, a second convex rib can also be disposed in advance between adjacent two second battery slot positions.

804, assembling the battery bracket equipped with the battery with the box body assembly.

805, providing a cover assembly, and fitting the cover assembly with the box body assembly that is assembled.

It should be noted that, the specific structure corresponding to the battery system in the embodiment of the present disclosure can be referred to the description of some implementations and embodiments.

In the embodiment of the present disclosure, through the installation process of steps 801 to 805, since the first arc-shaped rib positions and structural adhesive are disposed in each first battery slot position in advance, when the tooling is applied to the first battery slot position for auxiliary positioning and the assembly is finished, the next process (the battery and the aluminum bar are welded) can be carried out immediately without the need for other auxiliary positioning or the maintenance of the original auxiliary positioning, thereby shortening the production cycle and improving efficiency.

## Claims

1. A battery system (10) **characterized by** comprising:
at least one battery (300);
a battery box configured to accommodate the at least one battery, wherein the battery box comprises a box body assembly (200) and a battery bracket (100) installed in the box body assembly (200), the battery box is provided with a plurality of battery slot positions configured to accommodate the at least one battery, each of the plurality of battery slot positions comprises a first battery slot position (101) and a second battery slot position (201), the first battery slot position (101) and the second battery slot position (201) are disposed oppositely, the first battery slot position (101) is disposed in the battery bracket (100), the second battery slot position (201) is disposed in the box body assembly (200), and the box body assembly (200) and the battery bracket (100) clamp the at least one battery.

2. The battery system (10) according to claim 1, **characterized in that** a slot wall of the first battery slot position (101) is provided with a plurality of first arc-shaped rib positions (102) that abut against one of the at least one battery; and/or
a slot wall of the second battery slot position (201) is provided with a plurality of second arc-shaped rib positions (202) that abut against one of the at least one battery.

3. The battery system (10) according to claim 2, **characterized in that** the plurality of first arc-shaped rib portions are evenly spaced apart on the slot wall of the first battery slot position (101), and structural adhesive (400) for fixing the battery (300) is provided between adjacent first arc-shaped rib positions (102); and/or
structural adhesive (400) for fixing the battery is provided between one of the plurality of first arc-shaped rib positions (102) and two ends of the first battery slot position (101);
or,
the plurality of second arc-shaped rib portions are evenly spaced apart on the slot wall of the second battery slot position (201), and structural adhesive (400) for fixing the battery (300) is provided between adjacent second arc-shaped rib positions (202); and/or
structural adhesive (400) for fixing the battery is provided between one of the plurality of second arc-shaped rib positions (202) and two ends of the second battery slot position (201).

4. The battery system (10) according to claim 1, **characterized in that** a first convex rib (103) is disposed between adjacent first battery slot positions (101); and/or
a second convex rib (203) is disposed between adjacent second battery slot positions (201);
or,
each of a cross-sectional shape of the first battery slot position (101) and the second battery slot position (201) is a circular arc shape that is adapted to the at least one battery.

5. The battery system (10) according to claim 1, **characterized in that** a pressure relief channel is formed between the battery bracket (100) and the box body assembly (200), and an explosion-proof valve (301) of each of the at least one battery (300) is in communication with the pressure relief channel.

6. The battery system (10) according to claim 5, **characterized in that** an end plate (106) of the battery bracket (100) is provided with an opening (107) to communicate the explosion-proof valve (301) of the battery (300) and the pressure relief channel.

7. The battery system (10) according to claim 5, **characterized in that** a pressure relief valve is installed on a side plate of the pressure relief channel, and the pressure relief valve is in communication with the pressure relief channel;
the side plate comprises a first side plate (204) and a second side plate (206) disposed oppositely, and a first pressure relief valve (205) is disposed on the first side plate (204) of the box body assembly (200) close to a first end of the battery; and/or
a second pressure relief valve (207) is disposed on the second side plate (206) of the box body assembly (200) close to a second end of the battery.

8. The battery system (10) according to claim 5, **characterized in that** each of two ends of the battery (300) is provided with the explosion-proof valve (301), and the pressure relief channel comprises a first pressure relief channel (208) and a second pressure relief channel (209) respectively located on two sides of the battery bracket (100), the first pressure relief channel (208) is directly in communication with the explosion-proof valve (301) located at a first end of the battery, and the second pressure relief channel (209) is directly in communication with the explosion-proof valve (301) located at a second end of the battery.

9. The battery system (10) according to claim 5, **characterized in that** the battery system (10) further comprises a battery management system BMS assembly (600) connected to the battery, and the pressure relief channel and the BMS assembly (600) are disposed in two different sides of the battery bracket (100).

10. The battery system according to claim 9, wherein the battery bracket (100) comprises a bottom plate (104) located in a bottom portion of the first battery slot position (101), and the BMS assembly (600) is installed on a side of the bottom plate (104) away from the battery, an end of the bottom plate (104) abuts against a side plate of the box body assembly (200) to form the pressure relief channel on a side of the bottom plate (104) close to the battery.

11. The battery system (10) according to claim 10, **characterized in that** the battery bracket (100) further comprises a third side plate (105) connected to the side of the bottom plate (104) close to the battery, an end of the third side plate (105) abuts against the side plate of the box body assembly (200) to form the pressure relief channel on the side of the bottom plate (104) close to the battery, and a connection portion for fixing the battery bracket (100) to the box body assembly (200) is disposed on a side of the third side plate (105) away from the pressure relief channel.

12. The battery system (10) according to claim 11, **characterized in that** at least one reinforcing rib (210) is disposed on a side of the third side plate (105) away from the battery, and the connecting portion (211) is disposed on an end of the third side plate (105) away from the bottom plate (104), the at least one reinforcing rib (210) is connected to the third side plate (105) and the connecting portion (211) respectively, the connecting portion (211) and the pressure relief channel are respectively located on different sides of the battery bracket (100), and the connecting portion (211) is configured to fix the battery bracket (100) on the box body assembly (200).

13. The battery system (10) according to any one of claims 1 to 12, **characterized in that** the battery system (10) further comprises at least one busbar (500), the at least one busbar (500) is disposed on the battery bracket (100) and is connected to the at least one battery; or
the battery system (10) further comprises a cover assembly (700), the cover assembly (700) is disposed on the box body assembly (200), and the cover assembly (700) is configured to cover and fit with the box body assembly (200).

14. The battery system (10) according to any one of claims 1 to 10, **characterized in that** the battery bracket (100) is connected to the box body assembly (200).

15. A method of assembling a battery system (10), **characterized in that** the method comprises:
providing a battery bracket (100), and each first battery slot position (101) in the battery bracket (100) is provided with at least one first arc-shaped rib position (102) and structural adhesive (400) in advance;
assembling a battery (300) in the first battery slot position (101), and connecting a preset battery management system BMS assembly (600) and a busbar (500) with the battery;
providing a box body assembly (200), and each second battery slot position (201) in the box body assembly (200) is provided with at least one second arc-shaped rib position (202) and structural adhesive (400);
assembling the battery bracket (100) equipped with the battery (300) with the box body assembly (200); and
providing a cover assembly (700), and fitting the cover assembly (700) with the box body assembly (200) that is assembled.
